**Europäisches Patentamt**

**European Patent Office**

**Office européen des brevets**

(19)

(11) Veröffentlichungsnummer: **0 406 663 A2**

## (12) EUROPÄISCHE PATENTANMELDUNG

(21) Anmeldenummer: 90112070.9

(22) Anmeldetag: 26.06.90

(51) Int. Cl.5: **G07B 13/02**

(30) Priorität: 07.07.89 DE 3922373

(43) Veröffentlichungstag der Anmeldung:
**09.01.91 Patentblatt 91/02**

(84) Benannte Vertragsstaaten:
**AT DE ES FR GB IT SE**

(71) Anmelder: **Mannesmann Kienzle GmbH**
**Heinrich-Hertz-Strasse 45**
**D-7730 Villingen-Schwenningen(DE)**

(72) Erfinder: **Adams, Jürgen, Dipl.-Ing. (FH)**
**Am Mühlweiher 1**
**D-7730 Villingen-Schwenningen(DE)**
Erfinder: **Lais, Norbert**
**Görlitzer Strasse 6**
**D-7730 Villingen-Schwenningen(DE)**

(54) Einrichtung zur Erhöhung (Aufrundung) eines Fahrpreises.

(57) Es wird eine Einrichtung beschrieben zur Erhöhung eines Fahrpreises auf einen gerundeten Betrag, wobei der Fahrpreis durch einen elektronischen Taxameter (1) ermittelt wird und vor Erstellung eines Beleges (23) in einem zugeordneten Belegdrucker (13) durch manuell in vorgebbaren Schritten vorwählbare Erhöhung des Fahrpreisbetrages (3) gerundet wird. Aufgrund einer Betätigung von Bedienelementen (8, 24) ist eine stufenweise oder diskret einstellbare Rundung zum Abdruck im Belegdrucker (13) einstellbar, dergestalt daß der Beleg die Summe, gebildet aus dem Fahrpreis + Zuschlag + einem vom Fahrgast gewählten Zugeld, ausweist.

Anwendung insbesondere in Belegdruckern für Taxifahrzeuge.

FIG. 1

EP 0 406 663 A2

## EINRICHTUNG ZUR ERHÖHUNG (AUFRUNDUNG) EINES FAHRPREISES

Die Erfindung bezieht sich auf eine Einrichtung zur Erhöhung eines Fahrpreises auf einen gerundeten Betrag, insbesondere für die Anwendung in einem Belegdrucker im Zusammenwirken mit einem elektronischen Taxameter.

Im Betrieb eines Taxifahrzeuges ist der Einsatz eines Taxameters zur Ermittlung der mit Fahrgästen gefahrenen Wegstrecken und der hierfür zu entrichtenden Fahrpreise unverzichtbar. Ein hoher Prozentsatz der Fahrgäste benutzt das Taxifahrzeug zu dienstlichen Fahrten, die in aller Regel nachträglich vergütet werden, und wozu dann die Vorlage einer Quittung über die Fahrtkosten erforderlich ist. Die einfachste Art der Ausstellung einer Quittung ist eine manuelle Eintragung eines mit dem Fahrgast vereinbarten Fahrpreises auf einen mit Standardangaben vorgedruckten Beleg. Derart ausgestellte Belege beanspruchen wertvolle Zeit und sind insbesondere bezüglich der Fahrpreisangaben beliebig manipulierbar.

Um die Ausgabe von Belegen zu erleichtern und gleichzeitig eine Basis für korrekte Abrechnungen zu schaffen, ist dem Taxi-Microcomputer ein Belegdrucker zugeordnet, der mit Hilfe einer einfach zu bedienenden Tastatur durch Betätigen einer Taste eine Quittung für den Fahrgast erstellt. Die derzeit eingesetzten Belegdrucker fertigen jedoch nur Belege aus über den vom Taxameter ermittelten und auf den Drucker übertragenen Fahrpreis. Die an sich verbreitete Praxis, den auf dem Taxameter angezeigten Fahrpreis nach oben aufzurunden in der Absicht, dem Fahrer ein angemessenes "Trinkgeld" als Zugabe zu gewähren, ist nicht auf den gedruckten Beleg übertragbar. Insofern findet eine Anwendung derartiger Belegdrucker wenig Anklang bei den Taxifahrern.

Darüber hinaus hat in Tarifgebieten, in welchen eine Anwendung von Belegdruckern vorgeschrieben ist, nicht zuletzt auch zum Schutz der überzogenen Quittungen für Spesenabrechnungen, der Fahrgast keine Möglichkeit, ein "Trinkgeld" auch in normaler Höhe, beispielsweise über einen aufgerundeten Betrag, abzurechnen.

Aufgabe der Erfindung ist es, eine Einrichtung der eingangs beschriebenen Art zu schaffen, welche eine kontrollierbare Rundung (Erhöhung) eines durch den Taxameter ermittelten Fahrpreisbetrages durchführt und für einen nachfolgenden entsprechenden Abdruck auf einem Beleg bereitstellt.

Diese Aufgabe ist gelöst durch die im Kennzeichen des Patentanspruches 1 angegebenen Merkmale.

Weitere Ausgestaltungen der Erfindung sind in den Unteransprüchen angegeben.

Die Einführung der so bezeichneten Rundungs-Funktion für Belegdrucker ist insbesondere bei einem vorgeschriebenen Gebrauch bzw. in Verbindung mit einer Einbaupflicht eines Belegdruckers von besonderem Vorteil. Hiermit erst besteht beispielsweise für einen Taxifahrer die Möglichkeit, dem Fahrgast einen Beleg über die gesamten Fahrtkosten, nämlich über die Summe aus dem Fahrpreis + Zugeld, auszuhändigen. Neben einer Quittierung des tatsächlich gezahlten Fahrkostenbetrages gewährleistet diese Einrichtung zudem auch eine zügige und korrekte Erstellung des Beleges mit allen erforderlichen zusätzlichen Angaben, wie beispielsweise Datum, Fahrzeug-Kennung, Touren-Nr. und dergl, die nach herkömmlicher Art äußerst zeitaufwendig von Hand auf jedem einzelnen Quittungsbeleg eingetragen werden mußten.

Für die Ausgestaltung der schrittweisen Anhebung des Fahrpreises können unterschiedliche Verfahren angewandt werden. Hierzu lassen sich Rechenverfahren entwickeln, die eine vom Fahrgast angezeigte Betragserhöhung über schrittweise additive Rundung in bekannter vorgegebener Stufung regeln, ohne daß es bei einer Eingabe der Rundung zu Mißbrauch kommen kann.

Die Erfindung wird nachfolgend anhand eines in Zeichnungen dargestellten Ausführungsbeispiels näher erläutert.

Bei den Zeichnungen zeigt

FIGUR 1 einen Taxi-Microcomputer in Kombination mit einem über Leitungen verbundenen Belegdrucker,

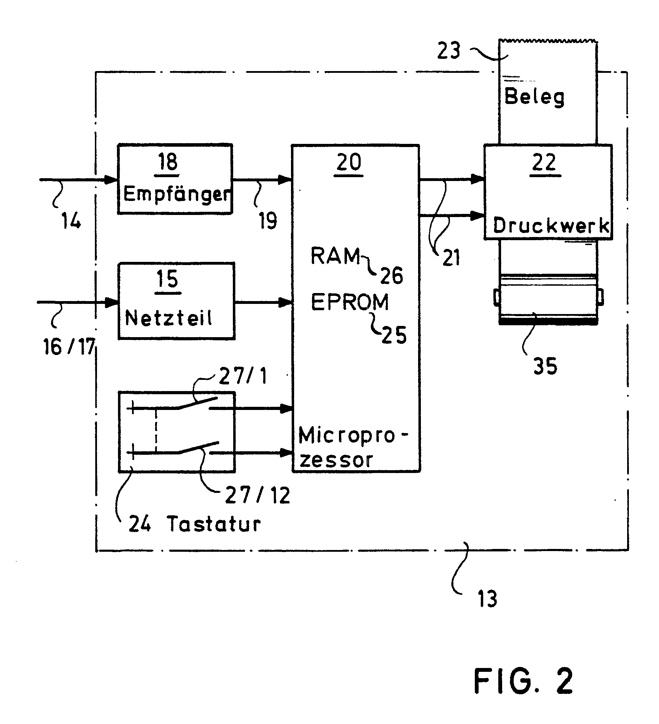

FIGUR 2 ein schematisiertes Blockschaltbild des Belegdruckers einschließlich der Eingangsschnittstellen.

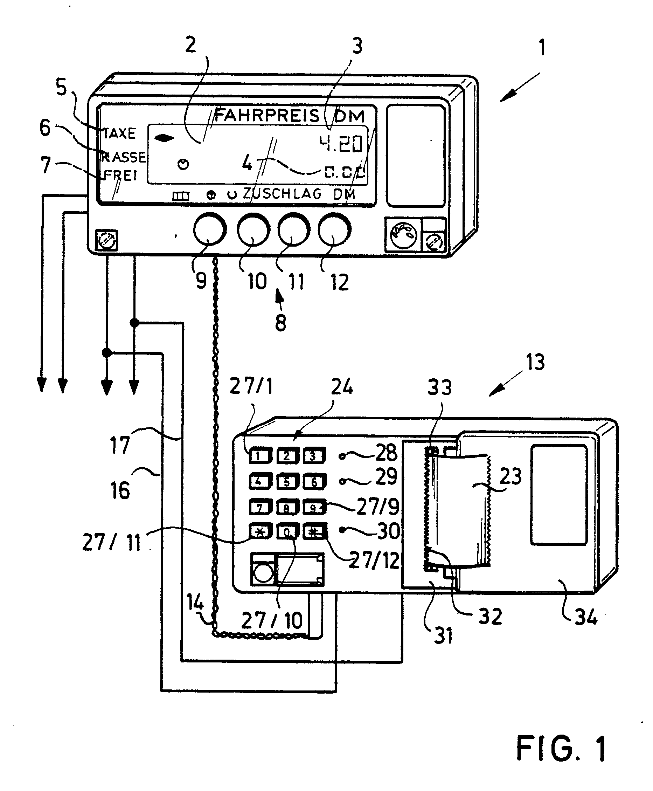

Der in FIGUR 1 gezeigte Taxi-Microcomputer 1 dient dem bekannten Zweck, aus Wegstrecken- und Zeitelementen über die Umrechnung in einem Microcomputer aufgrund vorher eingespeicherter Tarifdaten-Parameter kontinuierlich den Fahrpreis zu ermitteln und anzuzeigen. Alle internen Funktionen werden zentral von einem Microprozessor gesteuert und die errechneten Daten auf einem LC-Display 2 angezeigt. In normaler Betriebsweise werden im Display 2 ein Fahrpreis 3, ein Zuschlag 4, ein Funktionssymbol bezüglich der eingeschalteten Taxstufen- (5), Kassa- (6) oder Frei-Position (7) angezeigt. Darüber hinaus sind in dem multifunktionalen Display weitere hier nicht näher beschriebene Symbole und Ziffern vorgesehen, die sich im wesentlichen auf eine Sonderfunktion oder gegebenenfalls auf eine Störungsanzeige beziehen. Die manuell betätigbaren Bedienelemente 8 bestehen beim Ausführungsbeispiel gemäß FIGUR 1 aus vier Funktions-Tasten 9, 10, 11, 12, die mit Doppelfunktionen belegt sind, zum einen für den Taxbetrieb und zum anderen für den Kontrollbetrieb. Für die Taste 11 bleibt darauf hinzuweisen, daß durch deren Betätigung die Gesamtsumme aus Fahrpreis 3 + Zuschlag 4 gebildet und angezeigt werden kann und wobei danach aber über Summentrennung die vorherigen Einzelbeträge wieder getrennt einblendbar sind.

Wesentlich im Zusammenhang mit dem Gegenstand der Anmeldung sind die Anordnung von Schnittstellen im Taxi-Microcomputer 1, die die Grundlage für Erweiterungsmöglichkeiten bilden, beispielsweise für den Anschluß von Peripheriegeräten und, wie im vorliegenden Fall gezeigt, eines Druckers 13. Zum Betrieb des Druckers 13 beispielsweise stehen die Tarif- und Fahrtdaten sowie auch Kontrollzählerdaten an einer Schnittstelle des Microcomputers 1 für eine serielle Übertragung zur Verfügung und werden über Signalleitungen 14 in den Drucker 13 übertragen. Der Drucker 13 besitzt hierzu einen Empfänger 18 als Eingangsschnittstelle, dessen Informationseingang Maßnahmen gegen evtl. auftretende Rückwirkungen auf den Taxi-Microcomputer 1 aufweist. Die hierzu erforderliche galvanische Trennung ist durch einen Optokoppler realisiert. Ausgangsseitig des Empfängers 18 werden die Signaldaten über Informationsleitungen 19 in einen Microprozessor 20 geführt, wo sie in interner Verarbeitung durch Logik, RAM und PROM aufbereitet und ausgangsseitig über Datentleitungen 21 an ein Druckwerk 22 geführt werden. Das Druckwerk 22 schließlich erstellt je nach Aufruf einen Beleg 23 für den Fahrgast über die Fahrtkosten. Es ist darüber hinaus auch möglich, unterschiedliche Abdrucke, wie Kreditbelege, Schichtabrechnungen, Fahrtenprotokolle zu drucken. Der Drucker 13 stellt eine komplette Einheit dar und verfügt als solche über eine im Druckergehäuse integrierte Tastatur 24, über Programmspeicher (EPROM) 25 und über Datenspeicher (RAM) 26. Entsprechend erfolgt die Steuerung der Druckerfunktionen über eine Anordnung von zwölf Tasten 27/1 bis 27/12, die neben einer Auslösung von Funktionen auch einer Eingabe von Daten dienen. Eine Eingabe von Daten in den Drucker 13 ist nur möglich, wenn das Fahrzeug steht, desgleichen gilt auch, daß nur bei stehendem Fahrzeug die Erstellung eines Ausdruckes, beispielsweise einer Quittung, möglich ist. Die Druckfunktionen sind generell abhängig von bestimmten Funktionspositionen des die aktuellen Daten liefernden Taxi-Microcomputers 1, dergestalt daß beispielsweise Belege für den Fahrgast ausschließlich in der Betriebsart "Kasse" des Taxi-Microcomputers 1 und der gleichzeitigen Betätigung einer die Belegart bestimmenden Taste 27/1 bis 27/3 ausgedruckt werden. In der Betriebsart "Frei" des Taxi-Microcomputers 1 schließlich lassen sich verschiedene Protokollstreifen ausdrucken. Der Aufruf hierzu erfolgt über die Betätigung einer entsprechend zugeordneten Taste 27/1 bis 27/10. Über die Tasten 27/1 bis 27/10 lassen sich aber auch Zahlenwerte eingeben, deren korrekte Übernahme durch eine Betätigung einer weiteren Taste 27/11 quittiert wird. Eine fehlerhafte Eingabe von Daten läßt sich über eine Taste 27/12 löschen.

Gemäß dem Ausführungsbeispiel nach FIGUR 1 sind drei Anzeigeelemente 28, 29, 30 angeordnet, die dem Bediener die Betriebsbereitschaft bzw. einen bestimmten Betriebszustand anzeigen. Unter einer Abdeckung 31 befindet sich das nicht näher gezeigte Druckwerk 22, das den bedruckten Beleg durch einen Papierschlitz 33 mit einer Abreißkante 32 transportiert. Unter einem Deckel 34 befindet sich eine Papier-Vorratsrolle 35.

Ein Ausführungsbeispiel für die Rundung eines Fahrpreises besteht darin, über einen manuellen Bedienvorgang durch die schrittweise Betätigung einer Taste 27 eine stufenweise Rundung des Fahrpreises vorzunehmen. Hierzu sei ein praktisches Beispiel angeführt, wie durch eine dreistufige Rundung ein durch den Fahrgast angebotenes Zugeld in den Drucker eingegeben und somit in der Summe auf einem zur Verrechnung geeigneten Spesenbeleg zum Abdruck gebracht wird. Bei einem aus der Praxis gegriffenen Beispiel sei der Fahrpreis: DM 23,40 (lt.Anzeige im Display des Taxameters)
Durch eine Betätigung einer Taste in drei Schritten erfolgt eine stufenweise Anhebung des Zugeldes wie angegeben durch eine

1. Betätigung DM 23,50 (DM 0,10 Zugeld)
2. Betätigung DM 24,00 (DM 0,10 + 0,50 Zugeld)
3. Betätigung DM 25,00 (DM 0,10 + 0,50 + 1,00 Zugeld), d. h. eine hierzu anwendbare Regel beinhaltet folgende Verfahrensschritte:
1. Betätigung bedeutet: Rundung auf DM 0,50,
2. Betätigung bedeutet: Rundung auf DM 1,00,
3. Betätigung bedeutet: Rundung auf DM 5,00.

Eine Rundung eines angezeigten Fahrpreises auf einen durch den Fahrgast angebotenen höheren Betrag beruht damit auf der Basis einer zusätzlich durch mehrere wählbare Stufen fest vorgebbaren Zuwendung an den Fahrer und ist aufgrund eines damit nicht manipulierfähigen Vorgabemodus auch für eine behördliche Akzeptanz zulassungsfähig. Ein Rundungssystem kann natürlich abweichend von oben angezeigtem Beispiel auch tarifabhängig in anderer Stufung oder über eine wiederholbare oder über mehrere Stufen einstellbar gestaltet sein.

In einem weiteren Ausführungsbeispiel wird eine manuell einstellbare Rundung angegeben durch eine diskrete, beispielsweise über drei verschiedene Tasten 27/1, 27/2, 27/3 anwählbare Stufung. Dies bedeutet im einzelnen, daß z. B. bei einem im Display des Taxi-Microcomputers 1 angezeigten
Fahrpreis von DM 27.60
durch die Betätigung der Taste 27/1 der angezeigte Betrag auf
DM 28,00 (= DM 0,40 Zugeld)
erhöht und auf einem Beleg ausgedruckt wird. Durch die unmittelbare Betätigung der Taste 27/2 erhöht sich der Betrag von
DM 27,60 direkt auf
DM 30,00 (= DM 2,40 Zugeld).
Mit der unmittelbaren Betätigung der Taste 27/3 erfolgt eine direkte Erhöhung des angezeigten Betrages von
DM 27,60 auf
DM 35,00 (= DM 7,40 Zugeld)
für die Erstellung eines Beleges 23.

Bei dieser Lösungsvarianten sei unterstellt, daß jede Taste nur einmal betätigt werden kann. Bei einer darüber hinaus möglichen, mehrfachen Betätigung muß eine Vorkehrung zur Begrenzung der Anzahl der Betätigungen getroffen werden.

In umgekehrter Richtung ist es auch möglich, einen für den Abdruck durch die Taste 27/3 bereits vorgewählten Betrag, im Beispiel von DM 35,00, durch eine nachfolgende Betätigung der Taste 27/2 auf den Betrag von DM 30,00 zurückzunehmen und auf einem Beleg auszuweisen.

Die im Zusammenhang mit einer Rundung des Fahrpreisbetrages im Belegdrucker durchführbaren Maßnahmen bzw. Verfahrensschritte sind auch anwendbar direkt im Bereich des Taxi-Microcomputers 1, wo bereits eine Summenbildung der Beträge aus Fahrpreis + Zuschlag stattfindet und eine Rundung dabei bereits als Bestandteil einer Summenbildung wirksam ist und der so ermittelte Gesamtbetrag als Belegbetrag direkt zum Abdruck gelangt. Die Bedienelemente zur Auslösung der Rundung können dann funktional auch Teil des Taxi-Microcomputers 1 sein. Zu der Handhabung der Rundungsschritte ist noch zu bemerken, daß die Stufung variabel gestaltbar ist und bezüglich ihrer Wertstellung in den Tarifdatensatz einordenbar ist und so die Verfahrensweise der Einbeziehung eines geregelten Zugeldes auch durch behördliche Genehmigung bestätigt werden kann. Aufgrund einer Bindung von Verfahrensschritten zur Rundung des Endbetrages an die Tarifdaten sind die Rundungsschritte auch beeinflußbar durch eine Abhängigkeit von Zuständen bzw. Parametern für Werktag- und Sonn- bzw. Feiertagstarif oder Tag-/Nachtfahrten und dergl.

## Ansprüche

1. Einrichtung zur Erhöhung eines Fahrpreises auf einen gerundeten Betrag, insbesondere für die Anwendung in einem Belegdrucker im Zusammenwirken mit einem elektronischen Taxameter,
dadurch gekennzeichnet, daß
der Belegdrucker (13) einen Microprozessor (20), ein durch letzteren steuerbares Druckwerk (22) und Eingangsschnittstellen, bestehend aus einem Empfänger (18), einem Netzteil (15) und einer Eingabe-Tastatur (24), aufweist und durch die eine manuell in vorgebbaren Schritten wählbare Erhöhung eines von einem Taxi-Microcomputer (1) ermittelten Fahrpreises zur Quittierung von additiven Zuwendungen an den Taxifahrer in dem Belegdrucker einstellbar und auf einem Beleg (23) ausdruckbar ist.

2. Einrichtung nach Anspruch 1,
dadurch gekennzeichnet,
daß Bedienelemente (8, 24) vorgesehen sind, durch deren Betätigung eine stufenweise Aufrundung des angezeigten Fahrpreises auf einen gerundeten Betrag einstellbar ist.

3. Einrichtung nach Anspruch 2,
dadurch gekennzeichnet,
daß als Bedienelemente (24) mehrere Tasten (27) im Belegdrucker (13) vorgesehen sind, durch deren Betätigung eine beabsichtigte Fahrpreis-Betragserhöhung eingebbar ist.

4. Einrichtung nach Anspruch 3,
dadurch gekennzeichnet,
daß die Bedienelemente (8) funktional Bestandteil des Taxi-Microcomputers (1) sind.

5. Einrichtung nach Anspruch 3,
dadurch gekennzeichnet,
daß die beabsichtigte Betragserhöhung in Abhängigkeit von der Betätigung einer Taste (27) unterschiedlich abgestuft veränderbar ist.

6. Einrichtung nach Anspruch 3,
dadurch gekennzeichnet,
daß durch eine länger andauernde Tastenbetätigung eine über die Zeit steuerbare, selbständige, schrittweise Erhöhung auf höhere Rundungsstufen der Betragserhöhung einstellbar ist.

7. Einrichtung nach Anspruch 2,
dadurch gekennzeichnet,
daß auf die ermittelte Fahrpreissumme vor der Auslösung einer Rundungsfunktion eine prozentual oder als fester Betrag vorgegebene Erhöhung zugerechnet wird.

8. Einrichtung nach Anspruch 1,
dadurch gekennzeichnet,
daß eine diskrete Anwahl einer Erhöhung der additiven Zuwendungen über eine Einstellung der Erhöhung über manuelle Betätigung mehrerer Tasten (27/1 bis 27/3) erfolgt.

9. Einrichtung nach Anspruch 1,
dadurch gekennzeichnet,
daß eine Ausgabe von zwei Belegen (23) auslösbar ist, wovon ein Beleg (23/1) einen Fahrpreis und in getrenntem Abdruck einen Betrag entsprechend den additiven Zuwendungen ausweist, und der zweite Beleg (23/2) ausschließlich eine Summe aller Beträge (Fahrpreis + Zuschläge + additive Zuwendungen) erfaßt.

FAHRPREIS DM
4.20
ZUSCHLAG DM

FIG. 1

FIG. 2